# EUROPEAN PATENT APPLICATION

(11) **EP 1 732 342 A1**
(43) Date of publication of application: **13.12.2006**
(21) Application number: 05727065.4
(22) Date of filing: 23.03.2005
(51) Int. Cl.: H04Q 7/38

(54) **MOBILE COMMUNICATION SYSTEM, BASE STATION, AND HSDPA TRANSMISSION METHOD USED FOR THEM**

(30) Priority: 24.03.2004 JP 2004085864
(71) Applicant: NEC CORPORATION, Minato-ku, Tokyo 108-0014 (JP)
(72) Inventor: UEDA, Yoshio, NEC Corporation, Minato-ku, Tokyo 1080014 (JP)
(74) Representative: Betten & Resch
(86) International application number: PCT/JP2005/005207
(87) International publication number: WO 2005/091668

(57) **Abstract**

To provide a base station which makes it possible to apply HSDPA to radio bearers in the RLC-TM, such as circuit switched calls, as well and which can use the radio capacity to the full.

A call controller 23 terminates control signals, such as NBAP and ALCAP, and exercises control on a scheduler 24, a ciphering function unit 21 and a radio modulator 22. The scheduler 24 conducts scheduling of time division in downlink user data transfer. The ciphering controller 21 executes ciphering on data scheduled in the scheduler 24 on the basis of ciphering control information supplied from the call controller 23, and transmits resultant data to the radio modulator 22. The radio modulator 22 conducts radio modulation, and transmits data to the mobile station.

## Description

### Technical Field

The present invention relates to a mobile communication system, a base station, and an HSDPA (High Speed Downlink Packet Access) transmission method. In particular, the present invention relates to ciphering for a radio bearer on an RLC (Radio Link Control) transparent type transfer mode in the HSDPA transmission method.

### Background Art

Typically in a DCH (Dedicated Channel), synchronization at a transport channel level is set up between a mobile station (UE: user equipment) and a UTRAN (Universal Terrestrial Radio Access Network), and its transmission timing is transmitted by timing called CFN (Connection Frame Number).

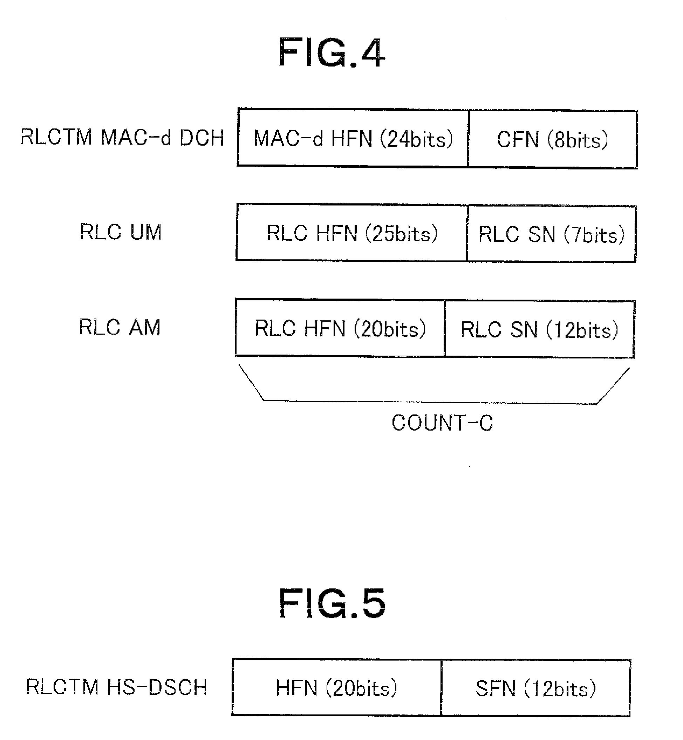

In a radio bearer on RLC-TM (Radio Link Control Transparent Mode), a MAC (Medium Access Control) - d protocol conducts ciphering as shown in FIG. 4 and the CFN is used in a COUNT-C which is used in ciphering calculation.

Ciphering is executed in RLC_AM and RLC_UM protocols on radio bearers on RLC_AM (Radio Link Control - Acknowledged Mode) and RLC_UM (Radio Link Control - Unacknowledged Mode).

On the other hand, basically in the HSDPA, one physical channel is used in common by a plurality of User Equipments in a time division manner, and scheduling for actually conducting radio communication is conducted in a base station (see, for example, Non-Patent Document 1).

Non-Patent Document 1: "High Speed Downlink Packet Access (HSDPA); Overall description; Stage 2" [3GPP (3rd Generation Partnership Project) TS25.308 V6.0.0 (2003-12)]

### Disclosure of the Invention

### Problem to be Solved by the Invention

In the above described HSDPA transmission method, the CFN cannot be applied as actual data transmission timing. This results in a problem that ciphering cannot be executed on radio bearers (such as circuit switched calls) on the RLC-TM.

In the case where the HSDPA transmission method is applied to a mobile communication network of IMT (International Mobile Telecommunications) - 2000, therefore, it is necessary to divide and assign radio resources, such as downlink channelizadon codes and downlink power, to resources for non-HSDPA used by radio bearers (such as circuit switched calls) in the RLC-TM and resources for the HSDPA used by radio bearers (such as packet calls) other than the RLC-TM. However, the above-described mobile communication network has a problem that a division loss in radio resources is caused and consequently radio resources cannot be used to the full.

Therefore, an object of the present invention is to solve the above-described problem and provide a mobile communication system in which the HSDPA can be applied to radio bearers in the RLC-TM, such as circuit switched calls, as well and the radio capacity can be used to the full, a base station, and an HSDPA transmission method used in them.

### Means for Solving the Problem

A mobile communication system according to the present system is a mobile communication system using the HSDPA in which one physical channel is used by a plurality of mobile stations in common in a time division form and scheduling for executing radio transmission on the physical channel is conducted by a base station, wherein the base station has a ciphering function for preventing control signals and user information directed to the mobile station from being intercepted illegally in a radio section.

A base station according to the present invention is a base station included in a mobile communication system using HSDPA in which one physical channel is used in common by a plurality of mobile stations in a time division form, wherein the base station conducts scheduling to execute radio transmission on the physical channel, and the base station has a ciphering function for preventing control signals and user information directed to the mobile station from being intercepted illegally in a radio section.

An HSDPA transmission method according to the present invention is an HSDPA transmission method using HSDPA in which one physical channel is used by a plurality of mobile stations in common in a time division form and scheduling for executing radio transmission on the physical channel is conducted by a base station, wherein the base station side executes a ciphering process for preventing control signals and user information directed to the mobile station from being intercepted illegally in a radio section.

### Effect of the Invention

Owing to configurations and operations described hereafter, the present invention brings about an effect that the HSDPA can be applied to radio bearers in the RLC-TM, such as circuit switched calls, as well and the radio capacity can be used to the full.

### Brief Description of the Drawings

FIG. 1 is a block diagram showing a configuration of a mobile communication system according to an embodiment of the present invention;
FIG. 2 is a block diagram showing an internal configuration of a base station shown in FIG. 1;
FIG. 3 is a sequence chart showing an operation sequence between nodes in a mobile communication system according to an embodiment of the present invention;
FIG. 4 is a diagram showing a ciphering counter (COUNT-C) defined in the 3GPP; and
FIG. 5 is a diagram showing a ciphering counter (COUNT-C) according to an embodiment of the present invention.

### Description of Reference Numerals

- 1:: Mobile station (UE: user equipment)
- 2:: Base station (node B)
- 3:: Base station controller (RNC: radio network controller)
- 4:: Mobile switching center (CN: core network)
- 21:: Ciphering function unit
- 22:: Radio modulator
- 23:: Call controller
- 24:: Scheduler

### Best Mode for Carrying Out the Invention

In a mobile communication system according to the present invention, a base station which actually conducts scheduling in a mobile system of IMT (International Mobile Telecommunications) using the HSDPA (High Speed Downlink Packet Access) executes ciphering on radio bearers in the RLC-TM (Radio Link Control - Transparent Mode).

In this case, ciphering is processing for preventing control signals and user information from being intercepted illegally in a radio section. Ciphering is executed by encrypting the control signals and user information by means of the ciphering key for each user and an algorithm for ciphering.

A base station controller notifies the base station of ciphering parameters (the ciphering key, START, a ciphering algorithm, ciphering execution timing) when executing ciphering. The base station initializes an HFN (Hyper Frame Number) formed of high-order bits in the COUNT-C on the basis of START, and combines a present SFN (Cell System Frame Number counter) to construct the ciphering counter (COUNT-C). The base station executes ciphering on radio bearers in the RLC-TM after ciphering execution timing.

In a mobile communication system according to the present invention, the HSDPA can also be applied to radio bearers (such as circuit switched calls) using the RLC-TM as radio bearers in a mobile communication system of IMT-2000 using the HSDPA.

In a conventional mobile communication system of IMT-2000 using the HSDPA, only a base station controller (RNC: radio network controller) is equipped with a ciphering function. In the present configuration, however, ciphering cannot be executed on RLC-TM radio bearers in the HSDPA scheme as described in the Non-Patent Document 1.

Here, the HSDPA transmission method is a radio scheme introduced to increase the downlink peak transmission rate, reduce the delay, and increase the throughput as faster an IMT-2000 transmission scheme.

To be more concrete, it becomes possible in the mobile communication system according to the present invention to apply the HSDPA to RLC-TM radio bearers as well by mounting a ciphering function unit on a base station (node B). The base station controller transmits a signal for giving notice of information concerning ciphering to the base station. As a result, it becomes possible on the base station side to execute the ciphering.

Since the ciphering counter (COUNT-C) defined in the 3GPP is formed of the HFN and the CFN (Connection Frame Number), it cannot be applied to the HSDPA system.

On the other hand, in the mobile communication system according to the present invention, the COUNT-C is formed of the SFN and the HFN. As a result, it becomes possible on the base station side as well to conduct ciphering.

Here, in the case of the RLC-TM, the COUNT-C is formed of the 8-bit CFN and the 24-bit MAC-d HFN. The HFN is incremented at the CFN periods. The COUNT-C is used together with the ciphering key and an algorithm kind in ciphering calculation.

The CFN is used as a frame counter at the Layer 2/ transport channel level between a mobile station (UE: user equipment) and a UTRAN (Universal Terrestrial Radio Access Network). The CFN is in the range of 0 to 255 frames ["Synchronization in UTRAN Stage 2" (3GPP TS25.402 V6.0.0 (2003-12)] (hereafter referred to as reference document 1).

The SFN deviates from the BFN [(Node B Frame Number (counter)] by T_cells, and it is used for paging and scheduling of broadcast information. The SFN is in the range of 0 to 4095 frames (see reference document 1).

An RLC (Radio Link Control) layer provides data transfer services in three modes, i.e., the RLC-AM (RLC-Acknowledged Mode), the RLC-UM (RLC-Unacknowledged Mode) and the RLC-TM to upper layers ["Radio Link Control (RLC) protocol specification"(3GPP TS25.322 V6.0.0) (2003-12)] (hereafter referred to as reference document 2).

As was described above, in the mobile communication system according to the present invention, it becomes possible to apply the HSDPA to all radio bearers by making possible for radio bearers in the RLC-TM as well to conduct ciphering.

In the mobile communication system according to the present invention, the HSDPA is made applicable to all bearers. As a result, it becomes unnecessary to divide downlink channelization codes and downlink power, which are radio resources, to resources for the HSDPA and resources for non-HSDPA. Therefore, it becomes possible to use radio resources for the HSDPA to the full.

### Embodiment

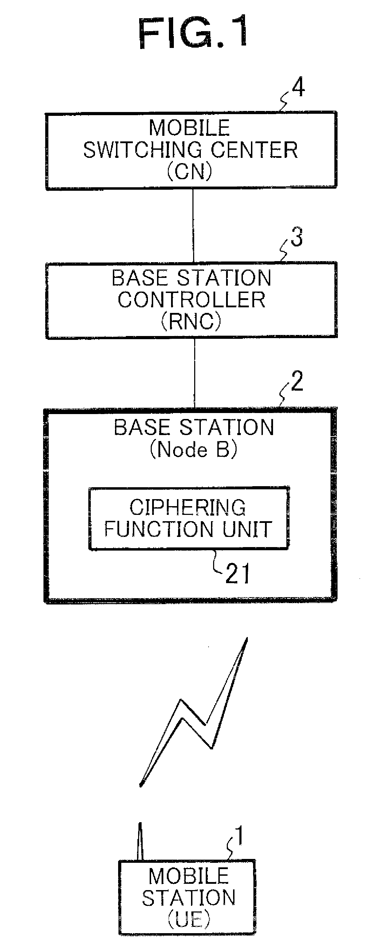

An embodiment of the present invention will now be described with reference to the drawings. FIG. 1 is a block diagram showing a configuration of a mobile communication system according to an embodiment of the present invention. In FIG. 1, a mobile communication system according to an embodiment of the present invention includes a mobile station (UE: user equipment) 1, a base station (node B) 2, a base station controller (RNC: radio network controller) 3, and a mobile switching center (CN: core network) 4. The base station 2 is provided a ciphering function unit 21.

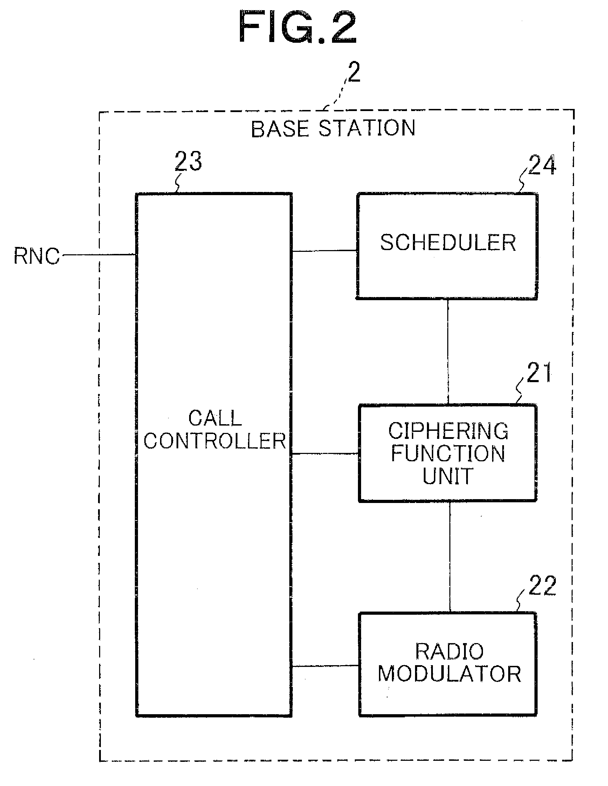

FIG. 2 is a block diagram showing an internal configuration of the base station 2 shown in FIG. 1. In FIG. 2, the base station 2 is formed of the ciphering function unit 21, a radio modulator 22, a call controller 23, and a scheduler 24.

The call controller 23 terminates control signals, such as NEAP (Node B Application Part) and ALCAP (Access Link Control Application Protocol), and exercises control on the scheduler 24, the ciphering function unit 21 and the radio modulator 22.

The scheduler 24 conducts scheduling of time division in downlink user data transfer. The ciphering controller 21 executes ciphering on data scheduled in the scheduler 24 on the basis of ciphering control information supplied from the call controller 23, and transmits resultant data to the radio modulator 22. The radio modulator 22 conducts radio modulation, and transmits data to the mobile station 1.

Here, ciphering is processing for preventing control signals and user information from being intercepted illegally in a radio section. The ciphering is executed by encrypting the control signal and user information by the use of the ciphering key for each user and an algorithm for ciphering.

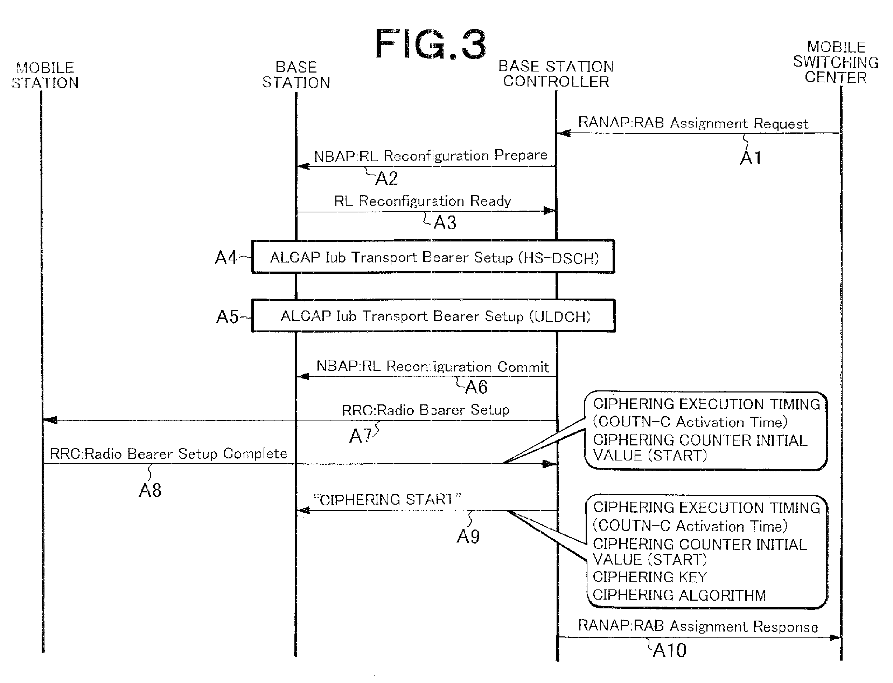

FIG. 3 is a sequence chart showing an operation sequence between nodes in a mobile communication system according to an embodiment of the present invention. FIG. 4 is a diagram showing a ciphering counter (COUNT-C) defined in the 3GPP. FIG. 5 is a diagram showing the ciphering counter (COUNT-C) according to an embodiment of the present invention. Operation conducted between nodes in a mobile communication system according to an embodiment of the present invention will now be described with reference to FIGs. 1 to 5.

In radio transmission using the HSDPA scheme according to an embodiment of the present invention, the ciphering controller 21 in the base station 2 executes ciphering on radio bearers using the RLC-TM (Radio Link Control - Transparent Mode).

Basically in the HSDPA, a plurality of mobile stations use a single channel in common by means of time division. The base station conducts scheduling for actually conducting radio transmission.

Operation conducted in the present embodiment will now be described by taking ciphering control exercised when setting up a circuit switched call as an example with reference to FIG. 3. Typically, ciphering control is already started when DCCH (Dedicated Control Channel) (signaling connection) is set up between the mobile station 1 and the mobile switching center 4 before circuit switching is set up.

In other words, the case where ciphering is already executed as to DCCH is supposed. Furthermore, it is supposed that DCCH is set up on ILS-DSCH (High Speed - Downlink Shared Channel).

Since DCCH uses RLC-UM (RLC-Unacknowledged Mode) and RLC-AM (RLC-Acknowledged Mode), ciphering is conducted by the RLC-UM and RLC-AM entities on the base station controller 3 side as in the conventional scheme.

With reference to FIG. 3, when setting up a circuit switched call, the mobile switching center 4 issues a RAB setup request for the circuit switched call to the base station controller 3 by using RANAP (Radio Access Network Application Part): RAB (Radio Access Bearer) Assignment Request protocols (A1 in FIG. 3).

The base station controller 3 decides to map the circuit switched call onto HS-DSCH. The base station controller 3 notifies the base station 2 of information concerning HS-DSCH suitable for setting up RAB, by using NBAP: RL (Radio Link) Reconfiguration Prepare (A2 in FIG. 3). The base station 2 returns its reply by using RL Reconfiguration Ready (A3 in FIC. 3).

Thereafter, the base station controller 3 executes setup of DCH (Dedicated Channel) transport bearers for uplink and HS-DSCH transport bearers for downlink according to an ALCAP procedure (A4 and A5 in FIG. 3).

After preparation within the network is completed, the base station controller 3 transmits an RRC (Radio Resource Control): Radio Bearer Setup message to the mobile station 1 to notify the mobile station 1 of information concerning HS-DSCH for setting up the circuit switching bearer (A7 in FIG. 3). At the same time, the base station controller 3 transmits RL Reconfiguration Commit to the base station 2 to notify the base station 2 of timing for applying new setting (A6 in FIG. 3).

Thereafter, the mobile station 1 sets ciphering execution timing (COUNT-C Activation Time) for applying ciphering and the ciphering counter initial value (START), and notifies the base station controller 3 of them by using an RRC: Radio Bearer Setup Complete message (A8 in FIG. 3). Operation described so far is operation prescribed in the ordinary 3GPP.

In the present embodiment, the base station controller 3 transmits a "ciphering start" message to the base station 2 in order to cause ciphering to be start to notify the base station 2 of ciphering execution timing (COUNT-C Activation Time), the ciphering counter initial value (START), the ciphering key and the ciphering algorithm (A9 in FIG. 3). Thereafter, the base station controller 3 returns a RANAP: RAB Assignment Response to the mobile switching center 4 (A10 in FIG. 3).

The call controller 23 in the base station 2 orders the ciphering function unit 21 to execute ciphering by using the ciphering parameters notified of by the base station controller 3. The ciphering function unit 21 executes ciphering on downlink data of RLC-TM radio bearers transmitted from the scheduler 24, and conducts transmission to the radio modulator 22.

In the ciphering control, the ciphering counter (COUNT-C) is used as an input of ciphering calculation. Since the ciphering counter (COUNT-C) for the RLC-TM includes the HFN (Hyper Frame Number) and the CFN (Connection Frame Number) as shown in FIG. 4, however, the ciphering counter cannot be applied to the HSDPA in which the base station 2 conducts scheduling, as it is.

In the present embodiment, the CFN is not used, but the SFN (Cell System Frame Number counter) is used as shown in FIG. 5. In other words, 12 bits included in 32 bits for the COUNT-C form the SFN and the remaining 20 bits form the HFN. The HFN is initialized by the ciphering counter initial value (START), and then incremented at SFN periods. By the way, it is necessary in the mobile station side 1 as well to conduct decryption for ciphering after radio demodulation.

Thus, in the present embodiment, the HSDPA can be applied to radio bearers in the RLC-TM, such as circuit switched, calls, as well by executing the ciphering function to the RLC-TM bearers when applying the HSDPA to the base station 2.

Furthermore, in the present embodiment, the HSDPA scheme can be applied to all bearers. Therefore, it becomes unnecessary to divide and assign the radio resources (channelization codes and power) to the HSDPA (such as packet calls) and the non-HSDPA (such as circuit switched calls), and the HSDPA can be applied to all radio bearers. Therefore, the radio capacity can be used to the full.

## Claims

1. A mobile communication system using HSDPA (High Speed Downlink Packet Access) in which one physical channel is used by a plurality of mobile stations in common in a time division form and scheduling for executing radio transmission on the physical channel is conducted by a base station,
wherein the base station has a ciphering function of preventing control signals and user information directed to the mobile station from being intercepted illegally in a radio section.

2. The mobile communication system according to claim 1, wherein the ciphering function is a function of encrypting the control signals and the user information by using at least a ciphering key for each user and an algorithm for ciphering transmitted from a base station controller.

3. The mobile communication system according to claim 1, wherein a ciphering counter used for the ciphering function comprises an HFN (Hyper Frame Number) and an SFN (Cell System Frame Number counter).

4. The mobile communication system according to claim 3, wherein the ciphering function is a function of executing ciphering on radio bearers in RLC-TM (Radio Link Control - Transparent Mode).

5. The mobile communication system according to claim 1, wherein the HSDPA can be applied freely to all bearers.

6. In a mobile communication system using HSDPA in which one physical channel is used in common by a plurality of mobile stations in a time division form, a base station for conducting scheduling to execute radio transmission on the physical channel,
wherein the base station has a ciphering function for preventing control signals and user information directed to the mobile station from being intercepted illegally in a radio section.

7. The base station according to claim 6, wherein the ciphering function is a function of encrypting the control signals and the user information by using at least a ciphering key for each user and an algorithm for ciphering transmitted from a base station controller.

8. The base station according to claim 6, wherein a ciphering counter used for the ciphering function comprises an HFN and an SFN.

9. The base station according to claim 8, wherein the ciphering function is a function of executing ciphering on radio bearers in RLC-TM.

10. The base station according to claim 6, wherein the HSDPA can be applied freely to all bearers.

11. An HSDPA transmission method using HSDPA in which one physical channel is used by a plurality of mobile stations in common in a time division form and scheduling for executing radio transmission on the physical channel is conducted by a base station,
wherein the base station executes a ciphering function for preventing control signals and user information directed to the mobile station from being intercepted illegally in a radio section.

12. The HSDPA transmission method according to claim 11,
wherein the ciphering function is a function of encrypting the control signals and the user information by using at least a ciphering key for each user and an algorithm for ciphering transmitted from a base station controller.

13. The HSDPA transmission method according to claim. 11,
wherein a ciphering counter used for the ciphering function comprises an HFN and an SFN.

14. The HSDPA transmission method according to claim 13,
wherein the ciphering function is a function of executing ciphering on radio bearers in RLC-TM.

15. The HSDPA transmission method according to claim 11,
wherein the HSDPA can be applied freely to all bearers.

## Amended claims

### Amended claims under Art. 19.1 PCT

1. (Canceled)

2. (Canceled)

3. (Amended) A mobile communication system using HSDPA (High Speed Downlink Packet Access) in which one physical channel is used by a plurality of mobile stations in common in a time division form and scheduling for executing radio transmission on the physical channel is conducted by a base station,
wherein the base station has a ciphering function of preventing control signals and user information directed to the mobile station from being intercepted illegally in a radio section, and
wherein a ciphering counter used for the ciphering function comprises an HFN (Hyper Frame Number) and an SFN (Cell System Frame Number counter),

4. (Canceled)

5. (Canceled)

6. (Canceled)

7. (Canceled)

8. (Amended) In a mobile communication system using HSDPA in which one physical channel is used in common by a plurality of mobile stations in a time division form, a base station for conducting scheduling to execute radio transmission on the physical channel,
wherein the base station has a ciphering function for preventing control signals and user information directed to the mobile station from being intercepted illegally in a radio section, and
wherein a ciphering counter used for the ciphering function comprises an HFN and an SFN.

9. (Canceled)

10. (Canceled)

11. (Canceled)

12. (Canceled)

13. (Amended) An HSDPA transmission method using HSDPA in which one physical channel is used by a plurality of mobile stations in common in a time division form and scheduling for executing radio transmission on the physical channel is conducted by a base station,
wherein the base station executes a ciphering function for preventing control signals and user information directed to the mobile station from being intercepted illegally in a radio section, and
wherein a ciphering counter used for the ciphering function comprises an HFN and an SFN.

14. (Canceled)

15. (Canceled)
